**Europäisches Patentamt**

(19) **European Patent Office**

**Office européen des brevets**

(11) Veröffentlichungsnummer: **0 088 908**

**B1**

(12) # EUROPÄISCHE PATENTSCHRIFT

(45) Veröffentlichungstag der Patentschrift:
22.07.87

(51) Int. Cl.⁴: **A 01 B 49/04,** A 01 D 43/12,
A 01 D 34/42

(21) Anmeldenummer: **83101617.5**

(22) Anmeldetag: **21.02.83**

(54) **Landwirtschaftliches Gerät zum Mulchen sowie zur Bodenlockerung.**

(30) Priorität: **12.03.82 DE 3208992**
**06.05.82 DE 3216951**

(43) Veröffentlichungstag der Anmeldung:
**21.09.83 Patentblatt 83/38**

(45) Bekanntmachung des Hinweises auf die Patenterteilung:
**22.07.87 Patentblatt 87/30**

(84) Benannte Vertragsstaaten:
**AT BE CH FR GB IT LI NL SE**

(56) Entgegenhaltungen:
**EP-A-0 049 330**
**DE-A-1 582 840**
**DE-A-2 111 457**
**DE-A-2 924 671**
**FR-A-2 172 010**
**FR-A-2 211 841**
**FR-A-2 225 072**
**FR-A-2 382 837**
**FR-A-2 437 145**
**GB-A-2 018 111**

(73) Patentinhaber: **Willibald, Josef, Frickinger Strasse 97, D-7771 Frickingen 2 Altheim (DE)**

(72) Erfinder: **Willibald, Josef, Frickinger Strasse 97, D-7771 Frickingen 2 Altheim (DE)**

(74) Vertreter: **Seemann, Norbert W., Brehmstrasse 37, D-7320 Göppingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung bezieht sich auf ein Gerät zur Bodenlockerung bei gleichzeitiger Einmischung von Mulch- oder Häckselgut in den gelockerten Bodenhorizont, gemäß dem Oberbegriff des Hauptanspruchs; wesentlichstes Einsatzgebiet eines derartigen Kombinationsgerätes soll dabei die kultivatorische Arbeit in Weinberggassen oder in Obstplantagen sein, also u.a. das Mulchen des auf dem Boden liegenden Ast- oder Rebholzes bei gleichzeitiger Lokkerung des Bodenhorizonts im selben Arbeitsgang mit Einmischung der Ablage des Mulchgutes im bzw. auf dem gelockerten Boden.

Ausgegangen als Stand der Technik wird dabei von einem Gerät nach der DE-A-2 506 233 (Stroppel) bzw. EP-A-0 049 330 oder DE-A-2 755 676 (Weichel). Die Nachteile dieser funktionstechnisch fast identischen Geräte liegen im wesentlichen in ihrer wenig praxisgerechten, relativ großen Baulänge sowie in ihrem durch die zusätzliche Tiefenlockerung des Erdbodens bedingten, hohen Zugkraftbedarf, so daß sie für die Verwendung in Verbindung mit den relativ schmalen sowie kleinen Weinberg-Spezialschleppern denkbar ungeeignet sind. Ein weiterhin aus der FR-A-2 437 145 bekanntes Bodenbearbeitungsgerät mit kleinerer Baulänge kann ebenso außer Betrachtung bleiben wie das aus der FR-A-2 382 837 bekannte, speziell für die kultivatorische Arbeit in Weinbergen gedachte Kombinationsgerät, da beide Geräte keine Hauben aufweisen, die die rotierenden Arbeitswerkzeuge abdecken und somit eine grundlegend andere Funktion haben.

Die vorliegende Erfindung liegt deshalb die Aufgabe einer Baulängenreduzierung derartiger Kombinationsgeräte ebenso zugrunde, wie die Schaffung baulicher und funktionsgemäßer Lösungen, die zum einen den speziellen Bedarfsfällen technologisch angepaßt sind und zum anderen hinsichtlich der Ausbildung von Arbeitswelle und Arbeitswerkzeugen des Mulchaggregates ebenfalls bauliche wie funktionelle Verbesserungen erbringen.

Ein großer Nachteil bei den bekannten Ausführungen dieser Kleingeräte ist nämlich noch darin zu sehen, daß bei dem meistens aus einem Rohr gebildeten Arbeitswellenteil in aufwendiger Schweißarbeit exakt ausgerichtete Halterungen für die Arbeitsschlegel angebracht werden müssen und diese Schlegel, resultierend aus dem Wellenaufbau, zudem nicht um 360° durch den Welleninnenraum hindurchschwingen können, falls sie auf ein Hindernis auftreffen.

Gelöst wird die mit der vorliegenden Erfindung gestellte Aufgabe durch die in den Patentansprüchen angegebenen, baulichen Mittel und Maßnahmen, die anhand von Zeichnungen dargestellt und im folgenden zudem im Detail näher erläutert sind. Es zeigen:

Figur 1 die Seitenansicht eines an sich bekannten Gerätes im Schnitt,

Figur 2 eine gleiche Ansicht mit einigen der erfindungswesentlichsten Details,

Figur 3 eine Draufsicht zu Figur 1,

Figur 4 die gleiche Draufsicht, jedoch teilweise ausgebrochen und mit der Andeutung weiterer Details gemäß Figur 2,

Figur 5 ein Teilstück der erfindungsgemäßen Arbeitswelle in Seitenansicht,

Figur 6 eine Alternativausführung zu Figur 5,

Figur 7 einen weiteren Teilbereich von Figur 6,

Figur 8 einen Arbeitswellenquerschnitt zu Figur 7,

Figur 9-15 verschiedene Arbeitswerkzeugausbildungen,

Figur 16 die Teilansicht einer erfindungsgemäßen Arbeitswelle und

Figur 17 eines der Arbeitswerkzeuge aus Figur 16 in Seitenansicht.

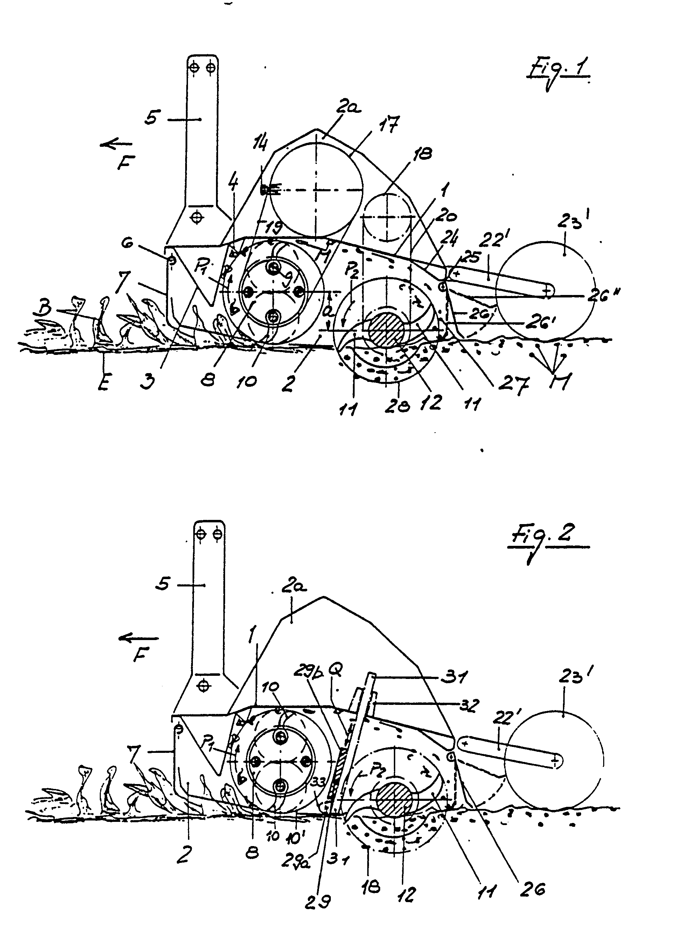

Das an sich bekannte Gerät nach den Fig. 1 und 3 besteht aus dem haubenförmigen Gehäusedeckblech 1 mit seinen Seitenteilen 2. 2a. der frontseitigen Gehäuseverstärkung 3, mit den an einer Querstange 6 gelagerten Prallblechen 7, den inneren Schlagleisten 4 sowie dem in Fahrtrichtung F vornliegenden Dreipunkt-Anbaubock 5.

In ebenfalls bekannter und daher nicht näher dargestellter Weise ist nun in den Seitenteilen 2 unterhalb des Gehäusedeckblechs 1 der eigentliche Mulchrotor 8 mit seinen um die Stangen 9 frei pendelnden Arbeitswerkzeugen 10 drehbar gelagert, sowie um ein Maß a zum Erdboden E hin tieferliegend und dahinter angeordnet die mit den starren Hackzinken 11 besetzte Welle 12 zur Auflockerung des Bodenhorizonts E und Einmischung der Mulchschnitzel M in den gelockerten Bodenhorizont; die Pfeile $P_1$ und $P_2$ geben dabei Jeweils die bevorzugte Drehrichtung an.

Die Drehung von Mulchrotor 8 und Hackwelle 12 wird dabei von ein und demselben Eingangsgetriebe 13 mit dem üblichen Zapfwellenanschluß 14 abgeleitet, wobei diese Ableitungen 15 und 16 zu den jeweiligen Keilriemen oder Kettenrädern 17 bzw. 18 zusammen mit den Antriebsverbindungen 19 und 20 sowie der Abdeck- bzw. Schutzhaube 21 aus Gründen der Platzersparnis in der Gerätebreite auf ein und derselben Seite 2a liegen.

Das gesamte Gerät kann zudem über die Gabeln 22 gehaltene Stützräder 23 auf dem Erdboden geführt sein, bzw. anstelle dieser kann entweder eine nachgeordnete Krümelwalze 23' über bewegliche, jedoch auch feststellbare Zugstangen 22' am Gehäuse 1 angelenkt oder eine über die gesamte Gerätebreite reichende, mittige Stützkufe 33 vorgesehen werden.

Von funktionstechnischer Bedeutung ist weiterhin das im Bereich der endseitigen Gehäuseverstärkung 24 um eine Achse 25 in verschiedene Positionen 26', 25'' verstellbar angeordnete, bis annähernd an den Boden E reichende Prallblech 26 mit dem der horizontale Abstand bzw. der Raum 27 zur Umlaufbahn 28 der Hackzinken 11 verändert und somit die Teilmenge bzw. das Mengenverhältnis des Mulchgutes variiert werden kann, das von den Zinken 11 auf ihrer Unlaufbahn 28 in den Boden E eingemischt bzw. nur auf der gelockerten Oberfläche abgelegt werden soll.

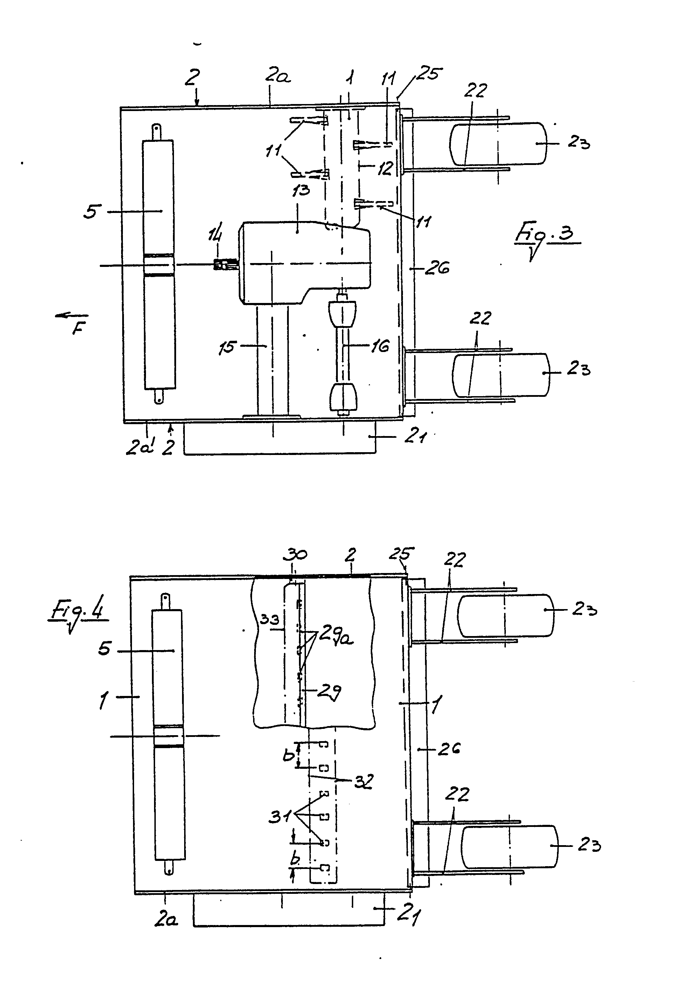

In spezieller Ausgestaltung der vorliegenden Erfindung ist gemäß der Darstellung in den Fig. 2 und 4 nunmehr eine Art Prallblech 29 im Zwischenraum zwischen Schlegelwelle 8 und Hackzinkenumlaufbahn 18 vorgesehen, das einerseits den freien Durchgangsquerschnitt Q für die Mulchmasse M nicht behindert, sondern bewirkt, daß von den Hackzinken 11 ggf. mit hochgefördertes Erdreich nicht in die Zinkenumlaufbahn gelangt und den Rotor 8 dadurch abbremst, also unnötige Antriebsenergie verbraucht. Das Blech 29 kann dabei mit Halterungen 30 an den Gehäuseseitenwänden 2 angeschraubt und zum Erdboden E hin zudem noch mit rechenartigen Zinken 29a besetzt sein, die unzerkleinertes Rebholz von der Bodenoberfläche abkämmen und den Arbeitswerkzeugen 10 erneut zuführen. Dieses Abkämmen kann auch durch prinzipiell bereits bekannte Rechenstäbe 31 bewirkt werden, die durch Halterungen 32 von der Oberseite des Gehäusedeckblechs 1 aus durch letztere hindurchragen, in Fahrtrichtung F gesehen hinter dem Prallblech 29 entlangverlaufen und ebenfalls leicht oberhalb des Erdbodens E enden. Man kann diesen Stäben 31 dabei zugleich eine Abstreiferfunktion geben, wenn man sie in den Umlaufbereich 28 der Hackzinken 11 hineinragen läßt.

Sinnvoll ist letztlich auch noch die bauliche Verbindung des Prallbleches 29 mit den Rechenstäben 31, die dabei zugleich die Halterung dieses Bleches 29 bilden könnten. Der hier nur schematisch angedeutete Mulchrotor 8 mit den Arbeitswerkzeugen 9, 10 sollte dabei erfindungsgemäß wie nachfolgend im Detail näher beschrieben, ausgebildet sein:

Als erfindungsgemäß in der Darstellung nach Fig. 5 ist generell anzusehen, daß gegenüber den bekannten, rohrförmigen Arbeitswellen, nunmehr der Wellenkörper aus rotationssymmetrischen Scheiben 41 bzw. 41' bzw. 41'' und diese Scheiben zu einem ebenfalls rotationssymmetrischen, säulenartigen Käfig miteinander verbindenden Stangen 42 gebildet ist. In spezieller Ausgestaltung dieses Erfindungsgedankens ist dabei grundsätzlich vorgesehen, daß diese zumindest teilweise kreisringförmig ausgebildet sind, parallel und mit gegenseitigem Abstand a zueinander bzw. zu den die Lagerzapfen 43 tragenden Endplatten 44 liegen, sowie Durchgangsbohrungen 45 aufweisen, durch die die Stangen 42 hindurchgesteckt und mit den Scheiben 91 bzw. 1' bzw. 1'' torsionssteif verbunden, d.h. vorzugsweise verschweißt sind.

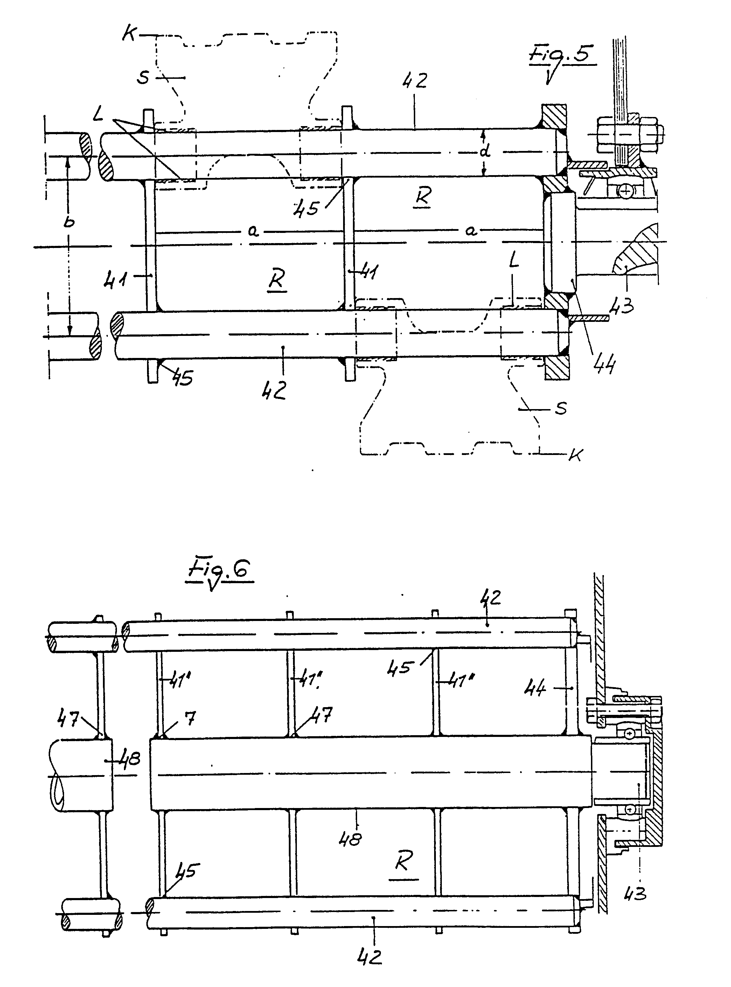

Sollen am Rotor gleichmäßig verteilt mehr als zwei Reihen von Arbeitsschlegeln S angeordnet werden, also beispielsweise sternförmig, so ist gemäß Darstellung in den Fig. 6 bis 8, ein Rotoraufbau erfindungsgemäß vorgesehen, bei dem eine oder mehrere der den End- oder Lagerplatten 44 benachbarte Scheiben 41'' als volle Kreisfläche ausgebildet, mit einer zusätzlichen Zentralbohrung 47 versehen und durch ein die Bohrung 47 durchsetzendes, mit dem jeweils benachbarten Lagerzapfen 43 fluchtendes Zentralrohr 48 zusätzlich verstärkt ist. Bezüglich der generellen Schlegelanordnung ist noch vorgesehen, daß letztere S am Rotorumfang gleichmäßig verteilt liegen und zur Erzielung einer in Umlaufrichtung gegebenen Überdekkung ihrer Schneidkanten K die Scheiben 41 bzw. 41' eine aus ihrer Ebene herausverlaufende Abkröpfung 46 aufweisen sollen, wobei die Arbeitswerkzeuge S jeweils zwischen zwei Scheiben 41 bzw. 41' bzw. 41'' sitzen und mit ihren Lagerbüchsen L die Stangen 42 umgreifen und Werkzeuggröße sowie gegenseitiger Stangenabstand b dabei derart bemessen sind, daß die Arbeitswerkzeuge S durch den freien Raum R zwischen den Stangen 42 ungehindert hindurchschwingen können.

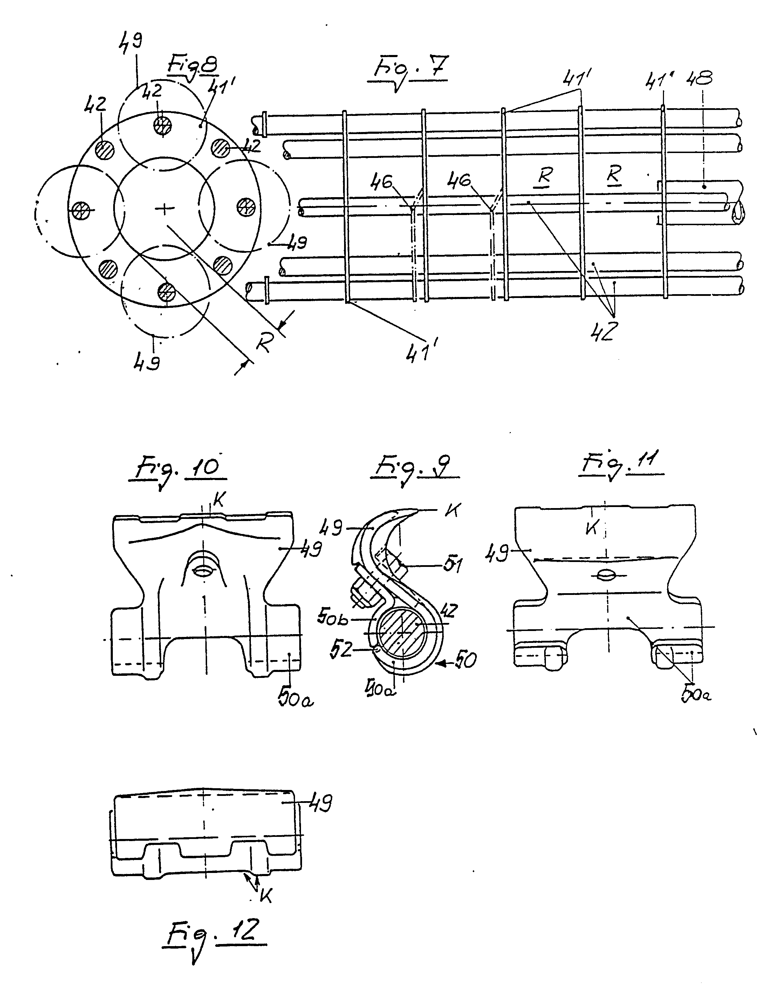

Bei dem im Detail in den Fig. 9 bis 12 dargestellten Arbeitsschlegel ist ein weiteres, erfindungsgemäßes Grundprinzip noch darin zu erkennen, die für die zuvor beschriebenen Rotoren passenden Schlegel 49 derart ausgebildet sind, daß sie im Bereich ihrer jeweiligen Lagerbüchse 50 mindestens zweiteilig ausgebildet sind, wobei einer dieser Teile 50a fest am Schlegelkörper 49 angeformt ist, der andere durch ein loses Zusatzteil 50b gebildet wird und beide Elemente 50a, 50b miteinander durch eine Spannschraube 51 o.dgl. zu einer Einheit miteinander verbunden sind, wobei vorteilhafterweise mindestens eines der Büchsenteile 50a die jeweilige Lagerstange 42 halbschalenförmig umschließt.

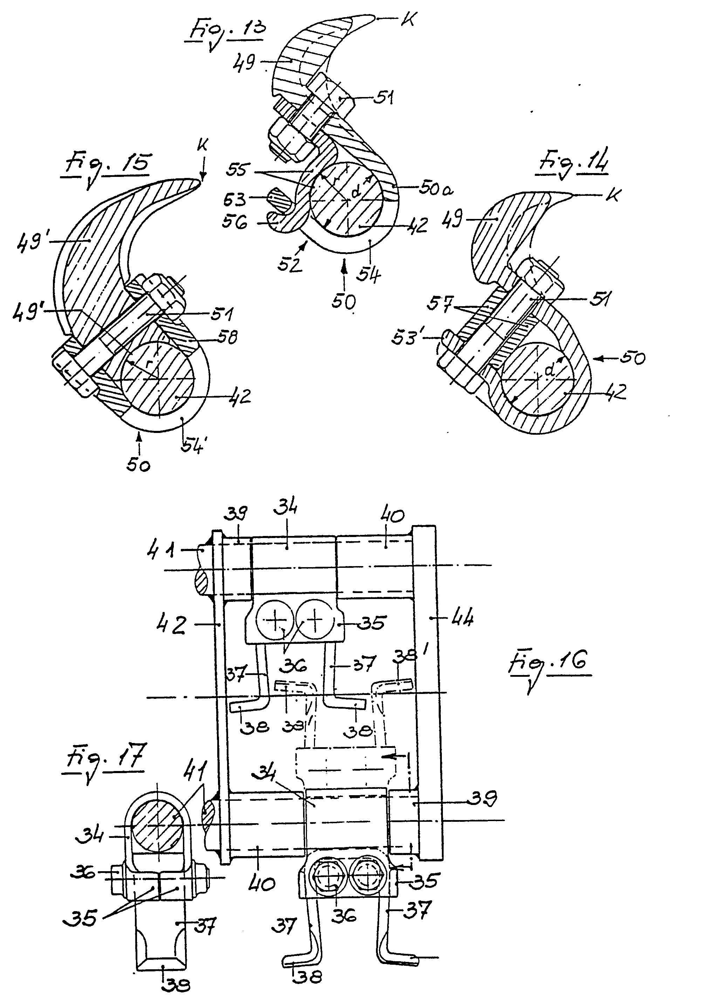

Eine gegenüber der Darstellung in Fig. 9 alternative Schlegelbefestigung kann gemäß Fig. 13 noch darin bestehen, daß der freie Schenkel 52 des Halbschalenteils 50a über den Stangendurchmesser d hochgezogen ist, sowie als Anschlag 53 eine Aussparung 54 im festen Teil 50a begrenzt, durch die der abnehmbare Lagerteil 55 mit einer Nase 56 hindurchgreift. Ebenso kann, wie Fig. 14 alternativ zeigt, eine Ausführung gewählt werden, bei der der freie Schenkel 53' über eine Distanzbüchse 57 und eine Schraubenverbindung 51 mit dem Schlegelkörper 49 verspannt ist. Fig.15 zeigt als weitere Variante noch die Möglichkeit, daß der eigentliche Schlegelkörper 49' zwischen eine Art Rohrschelle 58 eingesetzt ist und beide Teile 49', 58 in dieser Lage über eine Schraube 57 miteinander verbunden sind. Von Vorteil ist dabei stets eine dem Stangenradius r angepaßte Ausbildung der Anlageteile 55 bzw. 49''. In Fig.16 und17 ist letztlich noch die Möglichkeit angedeutet, eine Art Hakenschlegel 37, 38 mittels Schrauben 36 in einen Lagerkäfig 34, 35 einzuspannen und diesen über Distanzstücke 39 bzw. 40 derart auf den Stangen 42 zu positionieren, daß gemäß strichpunktiert angedeuteter Stellung 38', die Bahnen jeweils zweier Werkzeuge 37, 38 auf Lücke zueinander stehen bzw. ganz eng aneinander - beim eventuellen Durchschwingen durch den Wellenkörper 41, 42 - vorbeilaufen.

## Patentansprüche

1. Landwirtschaftliches Gerät zum Mulchen sowie zur Bodenlockerung bei gleichzeitiger Einmischung von Mulch- oder Häckselgut in den gelockerten Bodenhorizont mittels eines an sich bekannten Mulchrotors (8) mit nachgeordnetem Hackrotor (12), die beide in einem gemeinsamen Gehäuse (1, 2) gelagert sowie mit einem gemeinsamen Zentralgetriebe (13) verbunden sind und daß zur endseitigen Gehäusebegrenzung als Prallblech eine um eine horizontale Achse (25) verstellbare Klappe (26) dient, die mehr oder minder weit vom Erdboden (E) und der Umlaufbahn (28) der Hackzinken (11) in eine maximale Öffnungsstellung (26' nach 26'') nach oben verschwenkt sowie in jeder Zwischenstellung festgestellt werden kann,
dadurch gekennzeichnet,
daß in den freien Raum zwischen den Zinkenumlaufbahnen (10' bzw. 18) von Mulchrotor (8) und Hackzinken (11) ein weiteres, höhenverstellbares Prallblech (29) über die gesamte Breite des Gehäuses (1, 2) eingesetzt ist, dessen oberes Ende (29b) nicht bis an das Gehäusedeckblech (1) heranreicht, so daß zwischen diesem oberen Ende (29b) und dem Gehäusedeckblech (1) ein freier Durchtrittsquerschnitt (Q) für das Mulchgut (M) vorhanden ist.

2. Gerät nach Anspruch 1,
dadurch gekennzeichnet,
daß der bodenseitige Bereich des Prallbleches (29) mit kammartigen Zinken (29a) besetzt ist.

3. Gerät nach den Ansprüchen 1 und 2,
dadurch gekennzeichnet,
daß von der Oberseite des Gehäusedeckblechs (1) her durch den Freiraum (Q) mit gegenseitigem Horizontalabstand (b) Rechenstäbe (31) hindurchgeführt und mit dem Prallblech (29) verbunden sind.

4. Gerät nach Anspruch 3,
dadurch gekennzeichnet,
daß die Rechenstäbe (31) als Abstreifer für die Hackzinken (11) in deren Umlaufbahn (18) hineinragen.

5. Gerät nach Anspruch 1 bis 4,
dadurch gekennzeichnet,
daß der Wellenkörper des Mulchrotors (8) aus rotationssymmetrischen Scheiben (41 bzw. 41' bzw. 41'') und diese miteinander verbindenden Stangen (42) gebildet ist, wobei die Scheiben (41 bzw. 41' bzw. 41' ') zumindest teilweise kreisringförmig ausgebildet sind, parallel und mit gegenseitigem Abstand (a) zueinander bzw. zu den die Lagerzapfen (43) tragenden Endplatten (44) liegen, sowie Durchgangsbohrungen (45) aufweisen, durch die die Stangen (42) hindurchgesteckt und mit den Scheiben (41 bzw.

41' bzw. 41'') torsionssteif verbunden sind.

6. Gerät nach den Ansprüchen 1 bis 5,
dadurch gekennzeichnet,
daß eine oder mehrere der den End- oder Lagerplatten (4) benachbarte Scheiben (41'') als volle Kreisfläche ausgebildet, mit einer zusätzlichen Zentralbohrung (47) versehen und durch ein die Bohrung (47) durchsetzendes, mit dem jeweils benachbarten Lagerzapfen (43) fluchtendes Zentralrohr (48) zusätzlich verstärkt ist.

7. Gerät nach den Ansprüchen 1 bis 6,
dadurch gekennzeichnet,
daß die Arbeitsschlegel (S) am Wellenumfang gleichmäßig verteilt liegen und zur Erzielung einer in Umlaufrichtung gegebenen Überdeckung ihrer Schneidkanten (K) die Scheiben (41 bzw. 41') eine aus ihrer Ebene herausverlaufende Abkröpfung (46) aufweisen, die Arbeitswerkzeuge (S) jeweils zwischen zwei Scheiben (41 bzw. 41' bzw. 41'') sitzen und mit ihren Lagerbüchsen (L) die Stangen (42) umgreifen.

8. Gerät nach den Ansprüche 1 bis 7,
dadurch gekennzeichnet,
daß die Arbeitsschlegel (48) im Bereich ihrer jeweiligen Lagerbüchse (50) mindestens zweiteilig ausgebildet sind, wobei einer dieser Teile (50a) feat am Schlegelkörper (49) angeformt ist, der andere durch ein loses Zusatzteil (50b) gebildet wird und beide Elemente (50a, 50b) miteinander durch eine Spannschraube (51) o.dgl. zu einer Einhelt miteinander verbunden sind, wobei mindestens eines der Büchsenteile (50a) die jeweilige Lagerstange (42) etwa halbschalenförmig umschließt.

9. Gerät nach einem oder mehreren der vorhergehenden Ansprüche,
dadurch gekennzeichnet,
daß der freie Schenkel (52) des Halbschalenteils (50a) über den Stangendurchmeaser (d) hochgezogen ist, sowie als Anlage (53) eine Aussparung (54) im festen Teil (50a) begrenzt, durch die der abnehmbare Lagerteil (55) mit einer Nase (56) hindurchgreift (Fig. 13), bzw. daß der freie Schenkel (53') über eine Distanzbüchse (57) und eine Schraubenverbindung (51) mit dem Schlegelkörper (49) verspannt ist.

10. Gerät nach einem oder mehreren der vorhergehenden Ansprüche,
dadurch gekennzeichnet,
daß der eigentliche Schlegelkörper (49') zwischen eine Art Rohrschelle (58) eingesetzt ist und beide Teile (49', 58) in dieser Lage über eine Schraube (51) miteinander verbunden sind (Fig. 15), mit einer dem Stangenradius (r) jeweils angepaßten Ausbildung der Anlageteile (55 bzw. 49'').

11. Gerät nach einem oder mehreren der vorhergehenden Ansprüche,
gekennzeichnet durch
eine hakenartige Ausbildung des Arbeitsschlegels (37, 38) der über einen ihn umfassenden Lagerkäfig (34, 35) freipendelnd auf den Stangen (42) sitzt und dort mittels Distanzbüchsen (39 bzw. 40) auf Lücke zu dem bzw. den anderen Schlegeln (34 bis 38) positioniert ist.

## Claims

1. An agricultural implement for mulching and for combined soil cultivation and simultaneous mixing of mulched or chopped material into the loosened topsoil, in which a mulching rotor (8) of prior art is followed by a chopping rotor (12) with the two rotors being carried in a common housing (1, 2) with both being connected to a common central power transmission gear (13), with a flap (26) adjustable around a horizontal axis (25) to serve as a baffle plate extending to the ends of the housing and capable of being hinged upwards to a maximum opening position (26' to 26") and of being secured in any intermediate position at a greater or lesser distance from the ground (E) and from the orbital path (28) of the chopping tines (11).

characterized by

there being an additional baffle plate (29) that extends the full width of the housing (1, 2), being adjustable in height and being located in the free space between the orbital paths of the tines (10' and 18) of the mulching rotor (8) and of the chopping chopping rotor (11) and whose upper edge (29b) does not reach as far as the housing cover sheet (1) so that there is a free passage (Q) for the mulched material (M) between the upper edge (29b) of the baffle plate and the housing cover sheet (1).

2. An implement in accordance with Claim 1,

characterized by,

the edge of the baffle plate (29) nearest to the ground being equipped with comb-like tines (29a).

3. An implement in accordance with Claims 1 and 2,

characterized by,

trash bars (31) extending downwards from the top of the housing cover sheet (1) through the free space (Q), having a horizontal clearance (b) on each side and being connected to the baffle plate (29).

4. An implement in accordance with Claim 3,

characterized by,

the trash bars (31) extending as strippers into the orbital path (18) of the chopping tines (11).

5. An implement in accordance with Claims 1 to 4

characterized by,

The shaft assembly of the mulching rotor (8) comprising rotationally symmetrical discs (41 or 41' and 41") and of rods (42) connecting the said discs, whereby at least some of the said discs (41 or 41' and 41") are annular in form, all being parallel to one another and having a clearance (a) relative to one another and to the end plates (44) which carry the bearing journals (43) and with the said discs having throughgoing holes (45) through which the rods (42) are passed and so secured to the discs (41 or 41' and 41") as to be stiff against torsion.

6. An implement in accordance with Claims 1 - 5,

characterized by,

one or more of the discs (41") adjacent to the end or bearing plates (4) having a fully circular surface and being provided with an additional central bore (47) and being additionally strengthened by a central tube (48) that is aligned with the adjacent bearing journal (43) at the end concerned.

7. An implement in accordance with Claims 1 to 6,

characterized by,

the beaters (S) being evenly distributed around the periphery of the shaft and, in order to provide for the cutting edges (K) overlapping one another in the direction of rotation, by the discs (41 or 41') having an offset bent out of their surface plane, and by the beaters (S) each being located between two discs (41 or 41' or 41") with their bearing bushes (L) encompassing the rods (42).

8. An implement in accordance with Claims 1 to 7,

characterized by,

the beaters (48) being in at least two parts in the region of each of their bearing bushes (50), whereby one of the said parts (50a) is permanently formed as part of the beater itself (49) with the other being a separate part (50b) and by the two elements (50a and 50b) being united by a clamping bolt (51) or similar device, with at least one of the bush elements (50a) encompassing its associated bearing rod (42) in the manner of a half bearing shell.

9. An implement in accordance with one or more of the preceding claims,

characterized by,

the free shank (52) of the half bearing shell (50a) being raised away from the diameter of the rod (d) and having an opening (54) in the fixed part (50a) whose closure (53) serves as a retainer and through which the removeable bearing part (55) having a nose (56) is passed or by the free shank (53') being clamped against the body of the beater (49) by means of a spacer bush (57) and screw connection (51).

10. An implement in accordance with one or more of the preceding claims,

characterized by,

the beater body (49') itself being inserted into an element similar to a pipe clamp (58) and the two parts (49' and 58) being connected to one another in this position by a bolt (51), with the part coming against the rod (49") and being shaped to its radius (r)

11. An implement in accordance with one or more of the preceding claims,

characterized by,

the beaters (37, 38) being shaped in the form of hooks that, with the aid of bearing cages (34, 35) that wrap around them, are so seated on the rods (42) as to be free to swing back and forward while being located by means of spacer sleeves (39 or 40) to avoid colision with the other beater or beaters (34 to 38).

**Revendications**

1. Instrument agricole pour la couverture ainsi que pour l'ameublissement du sol avec incorporation simultanée de matière de couverture ou de matière hachée à l'horizon ameubli au moyen d'un rotor de couverture (8) en lui-même connu avec rotor de hachage (12) disposé à la suite, qui sont tous deux montés dans une enveloppe commune (1, 2) et reliés à une transmission centrale commune (13), instrument dans lequel est utilisé comme déflecteur, pour la limitation de l'enveloppe du côté de l'extrémité, un volet (26) réglable autour d'un axe horizontal, que l'on peut faire pivoter vers le haut (de 26' à 26''), plus ou moins loin du sol (E) et de la trajectoire de rotation (28) des dents hacheuses (11), à une position d'ouverture maximale, et bloquer en toute position intermédiaire, caractérisé en ce que dans l'espace libre entre les trajectoires de rotation de dents (10', 18) du rotor de couverture (8) et des dents hacheuses (11), est inséré, sur toute la largeur de l'enveloppe (1, 2), un déflecteur supplémentaire (29) réglable en hauteur, dont l'extrémité supérieure (29b) n'arrive pas jusqu'à la plaque de recouvrement (1) de l'enveloppe, de sorte qu'entre cette extrémité supérieure et la plaque de recouvrement (1) de l'enveloppe, il existe une section de passage libre (Q) pour la matière de couverture (M).

2. Instrument selon la revendication 1, caractérisé en ce que la région du déflecteur (29) située du côté du sol est garnie de dents similaires à un peigne (29a).

3. Instrument selon les revendications 1 et 2, caractérisé en ce qu'en partant du côté supérieur de la plaque de recouvrement (1) de l'enveloppe, des barreaux de râteau (31) passent, avec espacement horizontal mutuel (b), à travers l'espace libre (Q) et sont reliés au déflecteur (29).

4. Instrument selon la revendication 3, caractérisé en ce que les barreaux de râteau (31), en tant que racles pour les dents hacheuses (11), pénètrent dans la trajectoire de rotation de celles-ci.

5. Instrument selon les revendications 1 à 4, caractérisé en ce que le corps d'arbre du rotor de couverture (8) est formé de disques symétriques en rotation (41, 41', 41'') et de tiges (42) reliant ceux-ci entre eux, les disques (41, 41', 41'') étant conçus au moins partiellement en forme d'anneau circulaire, étant placés parallèlement, avec espacement mutuel (a), entre eux et aux plaques d'extrémité (44) portant les tourillons (43) et présentent des perforations de passage (45) à travers lesquelles les tiges (42) sont glissées et sont reliées aux disques (41, 41', 41'') de façon rigide en torsion.

6. Instrument selon les revendications 1 à 5, caractérisé en ce qu'un ou plusieurs des disques (41'') voisins des plaques d'extrémité ou de palier (4) sont conçus sous forme de surface circulaire complète, munis d'une perforation centrale supplémentaire (47) et, en outre, renforcés par un tube central (48) traversant la perforation (47), aligné sur le tourillon (43) chaque fois voisin.

7. Instrument selon les revendications 1 à 6, caractérisé en ce que les fléaux de travail (S) sont placés de façon uniformément répartie à la circonférence de l'arbre, en ce que pour obtenir un recouvrement donné de leurs tranchants (K) en direction circonférentielle, les disques (41, 41') présentent un décrochement (46) sortant de leur plan, et en ce que les outils de travail (S) se trouvent chaque fois entre deux disques (41, 41', 41'') et entourent par leurs coussinets (L) les tiges (42).

8. Instrument selon les revendications 1 à 7, caractérisé en ce que les fléaux de travail (48) sont constitués au moins en deux parties, chacun dans la région de leur coussinet (50), l'une (50a) de ces parties étant formée de façon fixe sur le corps (49) du fléau, l'autre étant formée par une pièce supplémentaire détachée (50b) et les deux éléments (50a, 50b) étant reliés entre eux en un ensemble par une vis de serrage (51), ou analogue, au moins une des parties de coussinet (50a) entourant la tige de palier correspondante (42) à peu près en forme de demi-coquille.

9. Instrument selon une ou plusieurs des revendications précédentes, caractérisé en ce que l'aile libre (52) de la partie de demi-coquille (50a) est relevée au-dessus du diamètre (d) des tiges et limite en tant qu'annexe (53) un évidement (54) de la partie fixe (50a), à travers lequel la partie amovible de palier (55) passe par un bec (56), ou en ce que l'aile libre (53') est serrée contre le corps de fléau (49) par l'intermédiaire d'une douille d'espacement (57) et d'un assemblage vissé (51).

10. Instrument selon une ou plusieurs des revendications précédentes, caractérisé en ce que le corps de fléau proprement dit (49') est inséré entre une espèce de collier à tubes (58), et en ce que les deux parties (49', 58) sont reliées entre elles dans cette position par l'intermédiaire d'une vis (51), avec une constitution des parties d'annexe (55, 49') chaque fois adaptée au rayon (r) de la tige.

11. Instrument selon une ou plusieurs des revendications précédentes, caractérisé par une constitution en forme de crochet du fléau de travail (37, 38) qui est placé sur les tiges (42) de façon librement oscillante par l'intermédiaire d'une cage de palier (34, 35) qui l'entoure et y est positionné au moyen de douilles d'espacement (39, 40), en quinconce par rapport à l'autre ou aux autres fléaux (34 à 38).

Fig. 1

Fig. 2

Fig.3

Fig.4

Fig.5

Fig.6

Fig. 8

Fig. 7

Fig. 10

Fig. 9

Fig. 11

Fig. 12

Fig. 13

Fig. 15

Fig. 14

Fig. 16

Fig. 17